# EUROPÄISCHE PATENTANMELDUNG

(11) **EP 0 985 367 A2**
(43) Veröffentlichungstag der Anmeldung: **15.03.2000**
(21) Anmeldenummer: 99117350.1
(22) Anmeldetag: 03.09.1999
(51) Int. Cl.: A47B 21/04

(54) **Arbeitsflächenplatte mit Schiene**

(30) Priorität: 12.09.1998 DE 29816402 U
(71) Anmelder: Westag & Getalit AG, 33378 Rheda-Wiedenbrück (DE)
(72) Erfinder: Eggert, Dieter, 33378 Rheda-Wiedenbrück (DE)
(74) Vertreter: Elbertzhagen, Otto, Dipl.-Ing.

(57) **Zusammenfassung**

Eine Platte für die Bildung von Arbeitsflächen in Küchen, Labors oder dergleichen ist mit einer entlang einer der Schmalflächenseiten (3) der Platte (1) angeordneten Schiene (4) zum Bereithalten von Gegenständen (9.13), wie Gerätschaften ausgestattet. Um eine solche Platte (1) zu schaften, bei der die Schiene (4) zum Bereithalten von Gegenständen (9-13), wie von Gerätschaften, raumsparend plaziert ist, wird die Schiene (4) entlang der rückwärtigen Schmalflächenseite (3) der Platte (1) angeordnet und hat eine nach oben offene Nut (7). Die Gegenstände (9-13) oder deren Halter (8) sind mit daran nach unten hin vorstehenden Steckfüßen oder -leisten (15) ausgestattet, die in die Nut (7) der Schiene (4) einsetzbar sind.

## Beschreibung

Die Erfindung bezieht sich auf eine Platte für die Bildung von Arbeitsflächen in Küchen, Labors oder dergleichen mit einer entlang einer der Schmalflächenseiten der Platte angeordneten Schiene zum Bereithalten von Gegenständen, wie Gerätschaften.

Es sind solche Platten zur Ausbildung von Arbeitsflächen bekannt, die entlang ihrer Vorderseite eine davon abstehende Schiene oder Stange aufweisen, wie man es früher von den Kohleherden her kannte. Eine solche Stange, die man auch als Reling bezeichnen kann, ist mit mehreren Haltern an der Plattenvorderseite befestigt, um einen gleichmäßigen Abstand von der Platte zu sichern. Diese Reling hat einen praktischen Zweck, man kann daran nämlich die Bedarfsgegenstände, insbesondere in einer Küche, wie Handtücher, Kellen, Topflappen und dergleichen anhängen, um sie bei Küchenarbeiten griffgünstig zur Hand zu haben.

In vielen Fällen wird eine an der Vorderseite der Arbeitsfläche vorstehend angeordnete Reling als störend empfunden, was vor allem bei engeren Platzverhältnissen der Fall ist. Hierbei kommt es darauf an, den rückwärtigen Platz auf der Arbeitsfläche besser zu nutzen, der in der Regel weniger in Anspruch genommen wird, weil meist die Arbeitsfläche an eine aufrechte Wand anschließt.

Hier setzt die Erfindung an, um eine Platte der eingangs genannten Art zu schaffen, bei der die Schiene zum Bereithalten von Gegenständen, wie von Gerätschaften, raumsparend plaziert ist.

Dies wird nach der Erfindung dadurch gelöst, daß die Schiene entlang der rückwärtigen Schmalflächenseite der Platte angeordnet ist und eine nach oben offene Nut hat und die Gegenstände oder deren Halter mit daran nach unten hin vorstehenden Steckfüßen oder -leisten ausgestattet sind, die in die Nut der Schiene von oben her einsetzbar sind.

Für die Erfindung ist wesentlich, daß die Halterung der betreffenden Gegenstände an der rückwärtigen Seite der Platte mittels der nach oben öffnenden Schiene eine raumsparende Unterbringung oberhalb der Arbeitsfläche ermöglicht, wozu sonst Wandhalter oder Befestigungsvorrichtungen an Unterschränken oberhalb der Arbeitsfläche benötigt werden. Die Steckverbindung zwischen den Gegenständen und der rückwärtig an der Platte sitzenden Schiene ermöglichst ein leichtes Einsetzen, Umsetzen oder Verschieben der Gegenstände, wobei auch noch die Art der Steckverbindung je nach dem Spiel zwischen den miteinander korrespondierenden Steckelementen für eine lose oder für eine dauerhafte Fixierung ausgelegt werden kann.

Die Schiene mit der nach oben offenen Nut kann entweder entlang der rückwärtigen Schmalflächenseite auf die Oberseite der Platte aufgesetzt sein, wobei dann die Rückseiten der Platte und der Schiene miteinander fluchten. In anderer Ausbildung nach der Erfindung ist die Schiene mit einer nach vorn hin liegenden Anlageseite an die rückwärtige Schmalflä-chenseite der Platte angesetzt, wobei die Oberseite der Schiene mit der Oberseite der Platte flächenbündig liegen kann. Grundsätzlich kann die Schiene auch über die Oberseite der Platte vorstehen, um eine Schwallkante zu bilden.

Um die nutzbare Oberseite der Platte möglichst wenig einzuschränken, ist es von weiterem Vorteil, wenn die jeweiligen Gegenstände, Gerätschaften oder dergleichen in angesetzter Anordnung über die Oberseite der Platte nach oben vorstehen. Hierbei können sie nach vorn übergeneigt angeordnet sein, wobei sich in jedem Falle ein entsprechender Abstand zwischen dem betreffenden Gegenstand und/oder seinem Halter und der Oberseite der Platte ergibt. Hierfür sorgen unterseitig vorstehende Stützen an den Gegenständen oder ihren Haltern, an denen die Steckfüße oder -leisten angeordnet sind. Im Bereich dieser Stützen können nach vorn hin Absätze angeordnet sein, die auf die nach vorn hin liegende Oberseite der Schiene oder auch den benachbarten Bereich der Oberseite der Platte aufgesetzt werden können, um einen zusätzlichen Stützeffekt zu erzielen.

Die Gegenstände oder Gerätschaften und die jeweils benötigten Halter, die an der rückwärtigen Schiene der Platte durch Einstecken befestigt werden, können unterschiedlicher Art sein, so wie man sie jeweils in der Küche in dem Labor oder in einem sonstigen Arbeitsbereich benötigt. So können die Halter als Konsolen oder Borde ausgebildet sein, um darauf etwas ablegen zu können. Aufnahmen für Behältnisse können an den Haltern vorgesehen werden, um in diesen Behältnissen Vorräte oder Gerätschaften aufnehmen zu können. Messerbalken, Ablaufborde oder auch Steckdosenleisten lassen sich an der mit der rückwärtigen Schiene versehenen, erfindungsgemäßen Platte durch Einstecken befestigen. Zur Unterbringung elektrischer Anschlußleitungen können die Konsolen oder Borde aber auch die rückwärtig an der Platte angeordnete Schiene mit Kabelkanälen versehen sein.

Die Erfindung wird nachfolgend anhand der Zeichnung an Ausführungsbeispielen noch näher erläutert. Dabei zeigen:
- Fig. 1: in perspektivischer Darstellung den rückwärtigen Teil einer eine Arbeitsfläche bildenden Platte mit einer an die rückwärtige Schmalflächenseite angesetzten Schiene zur Aufnahme von Gegenständen und Gerätschaften,
- Fig. 1a: in perspektivischer Wiedergabe eine leicht abgewandelte Ausführungsform der Platte entsprechend Fig. 1, bei der jedoch die rückwärtige Schiene auf die Plattenoberseite aufgesetzt ist,
- Fig. 2: die Seitansicht einer in die rückwärtige Schiene der Platte einsteckbaren Konsole,
- Fig. 3: die Konsole gem. Fig. 2 in eingestecker Anordnung,
- Fig. 4: in perspektivischer Wiedergabe ein in die Schiene der Platte einsteckbares Ablaufbord,
- Fig. 5: in perspektivischer Wiedergabe eine in die Schiene der Platte einsteckbare Steckdosenleiste und
- Fig. 6: ein in die rückwärtige Schiene der Platte einsteckbarer Halter mit einer Mehrzahl von Aufnahmen für Behältnisse.

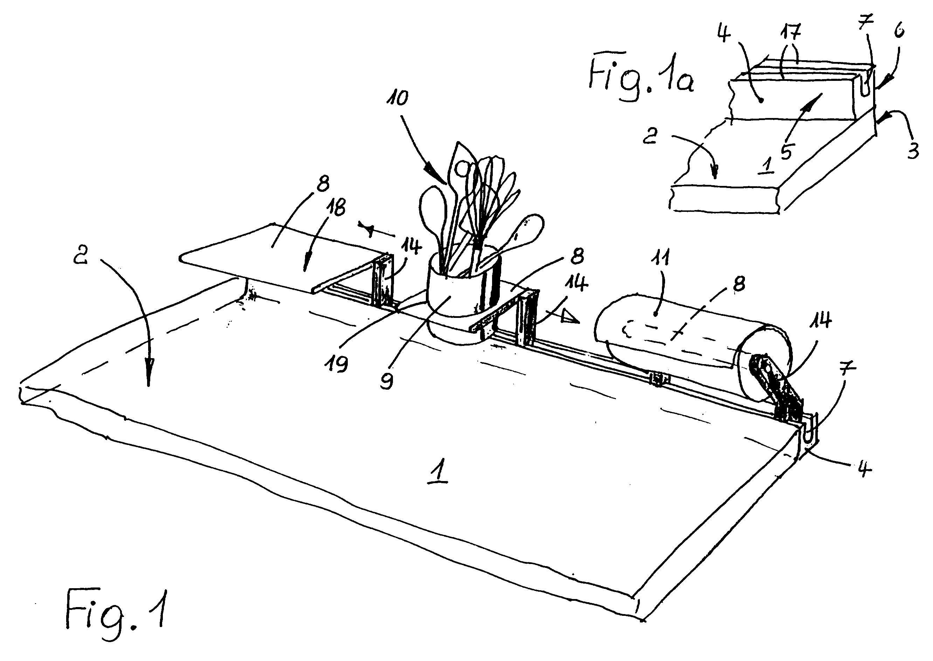

Im einzelnen erkennt man in Fig. 1 den rückwärtigen Bereich einer Platte 1, mit der in einer Küche eine Arbeitsfläche gebildet ist. Entsprechend hat die Platte 1 eine ebene Oberseite 2, welche die Arbeitsfläche darstellt. Wie in Fig. 1a erkennbar, hat die Platte 1 eine rückwärtige Schmalflächenseite 3, die in den meisten Einbaulagen benachbart einer Gebäudewand angeordnet ist. Die Besonderheit der Platte 1 liegt darin, daß an der rückwärtigen Schmalflächenseite 3 der Platte 1 oder auf der Oberseite 2 der Platte 1 unmittelbar nahe der rückwärtigen Schmalflächenseite 3 eine Schiene 4 angebracht ist. Mit der nach vorn hin liegenden Anlageseite 5, wie sie in Fig. 1a angedeutet ist, kann die Schiene 4 an der Schmalflächenseite 3 der Platte 1 anliegend montiert sein, indem die Schiene 4 hieran festgeklebt oder angeschraubt ist. Die leistenförmige Schiene 4 hat einen rechteckigen und quadratischen Umriß und entsprechend eine ebene Unterseite, mit der sie entsprechend Fig. 1a auf die Oberseite 2 der Platte 1 aufgesetzt werden kann. In diesem Falle fluchtet die Rückseite 6 der Schiene 4 mit der rückwärtigen Schmalflächenseite 3 an der Platte 1.

Die Schiene 4 ist ein besonderes Funktionselement und weist dazu eine in Längsrichtung durchlaufende Nut 7 auf, die zur Oberseite 17 der Schiene 4 hin öffnet. Die Nut 7 der Schiene 4 stellt ein Steckelement dar, das mit entsprechenden Steckgliedern an Haltern 8 zusammenwirken kann, die zur Aufnahme oder Stützung bestimmter Gegenstände bestimmt sind, wie sie im Küchenbereich benötigt werden. Fig. 1 zeigt beispielhaft einen Halter 8 in Gestalt einer Konsole, die eine kreisförmige Aussparung als Aufnahme 19 für einen Behälter 9 hat. In diesem Behälter 9 können in aufrechter Anordnung Küchengeräte, wie Löffel, Rührbesen, oder sonstige Geräte, die hier allgemein mit der Bezugsziffer 10 versehen sind, bereitgehalten werden. In der Darstellung von Fig. 1 links erkennt man ein Ablagebord als Halter 8, welches oberseitig eine Ablagefläche 18 aufweist, die in Ergänzung der Oberseite 2 der Platte 1 eine weitere Arbeits- oder Ablageebene darstellt, je nachdem wie groß das Ablagebord insgesamt gestaltet ist. In der Darstellung von Fig. 1 rechts trägt der Halter 8 in entsprechender Ausbildung eine Papierrolle 11, von der vor allem zu Wischzwecken Papierblätter abgezogen werden können.

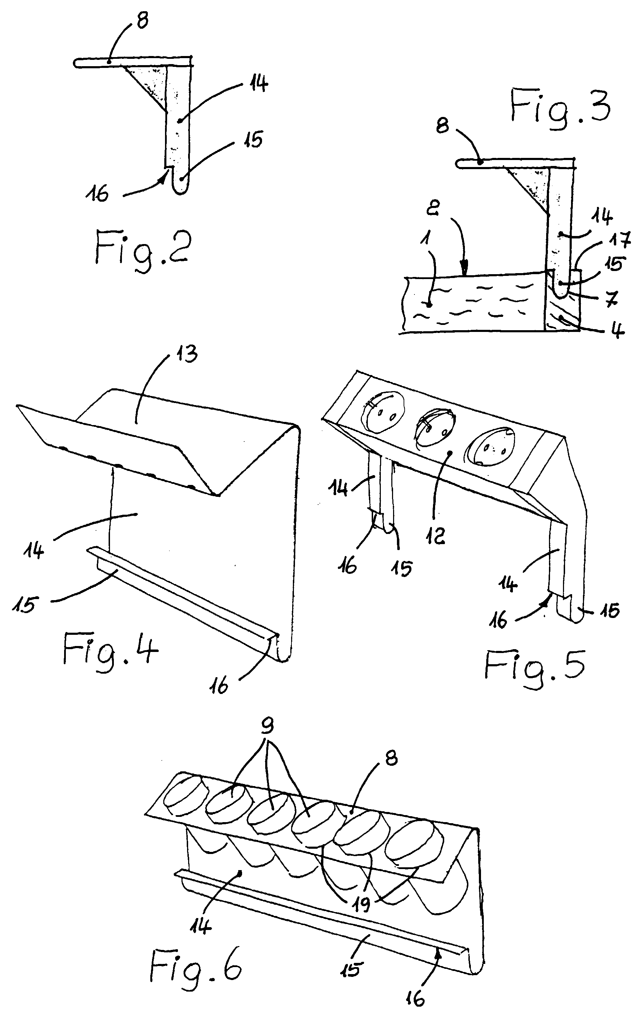

Die Kalter 8 haben nach unten vorstehende Stützen 14, die in die Nut 7 der Schiene 4 von oben her eingesteckt sind. Dies erkennt man besonders gut an den Ausführungsbeispielen von Fig. 2 und Fig. 3. Am Unterende einer solchen Stütze 14 findet sich ein Steckfuß 15, dessen Querschnitt formschlüssig an den der Nut 7 der Schiene 4 angepaßt ist. Um bei vorn überkragender Anordnung des Halters 9 und der davon getragenen Gegenstände erhöhte Stützkräfte übertragen zu können, ist an den Stützen 14 der Halter 8 ein an der Vorderseite vorspringender Absatz 16 vorgesehen, der in ordnungsgemäß eingesteckter Anordnung der jeweiligen Stütze 14 auf dem nach vorn hin liegenden Teil der Oberseite 17 der Schiene 4 aufliegt, wie es aus Fig. 3 hervorgeht.

Weitere Gegenstände, die entsprechend der Darstellung von Fig. 1 in die rückwärtige Schiene 4 an der Platte 1 einge steckt werden können, gehen aus den Figuren 4 - 6 hervor. So zeigt Fig. 4 ein Abtropfbord 13, welches eine länglich durchgehende Stütze 14 und eine Steckleiste 15 hat, an der ebenfalls ein vorderseitig vorstehender Absatz 16 ausgebildet ist, um hierdurch zusätzliche Stützkräfte aufbringen zu können. Fig. 5 gibt eine Steckdosenleiste 12 wieder, die mit zwei Stützen 14 und Steckfüßen 15 ausgestattet ist. In der Steckdosenleiste 12 sowie in deren Stützen 14 können Kabelkanäle vorgesehen sein, um den elektrischen Anschluß vornehmen zu können. In gleicher Weise kann in der Schiene 4 ein abgeteilter Kabelkanal vorgesehen werden. Fig. 6 veranschaulicht einen Halter 8 mit einer Mehrzahl von Aufnahmen 19 für Behälter 9, die z.B. zur Aufnahme von Gewürzen, Zucker oder Salz dienen können. Auch hier findet man eine längslaufende Stütze 14 mit einer Einsteckleiste 15 vor, die zur zusätzlichen Abstützung mit einem vorderseitigen Absatz 16 versehen ist. Sofern ebenso wie bei der Steckdosenleiste 12 ein elektrischer Anschluß für an den Haltern 8 aufgenommenen elektrischen Geräten benötigt wird, können auch hier in die Halter 8 oder in deren Stützen 14 elektrische Anschlußkanäle integriert sein.

## Patentansprüche

1. Platte für die Bildung von Arbeitsflächen in Küchen, Labars oder dergleichen mit einer entlang einer der Schmalflächenseiten (3) der Platte (1) angeordneten Schiene (4) zum Bereithalten von Gegenständen (9-13), wie Gerätschaften,
dadurch gekennzeichnet,
daß die Schiene (4) entlang der rückwärtigen Schmalflächenseite (3) der Platte (1) angeordnet ist und eine nach oben offene Nut (7) hat und die Gegenstände (9-13) oder deren Halter (8) mit daran nach unten hin vorstehenden Steckfüßen oder -leisten (15) ausgestattet sind, die in die Nut (7) der Schiene (4) einsetzbar sind.

2. Platte nach Anspruch 1,
dadurch gekennzeichnet,
daß die Schiene (4) mit einer an nach vorn hin liegenden Anlageseite (5) an die rückwärtige Schmalflächenseite (3) der Platte (1) angesetzt ist.

3. Platte nach Anspruch 2,
dadurch gekennzeichnet,
daß die Schiene (4) mit ihren Oberseiten (17) beidseits der Nut (7) flächenbündig mit der Oberseite (2) der Platte (1) ist.

4. Platte nach Anspruch 1,
dadurch gekennzeichnet,
daß die Schiene (4) auf die Oberseite (2) der Platte (1) aufgesetzt ist und mit ihrer Rückseite (6) flächenbündig mit der rückwärtigen Schmalflächenseite (3) der Platte (1) ist.

5. Platte nach einem der Ansprüche 1 - 4,
dadurch gekennzeichnet,
daß die Schiene (4) einen rechteckigen oder quadratischen Umriß hat.

6. Platte nach einem der Ansprüche 1 - 5,
dadurch gekennzeichnet,
daß die Schiene (4) einen U-förmigen Querschnitt hat.

7. Platte nach einem der Ansprüche 1 - 6,
dadurch gekennzeichnet,
daß die Steckfüße oder -leisten (15) einen formschlüssig an den Querschnitt der Nut (7) der Schiene (4) angepaßten Querschnitt haben.

8. Platte nach einem der Ansprüche 1 - 7,
dadurch gekennzeichnet,
daß die Gegenstände (9-13) oder der Halter (8) in an die Schiene (4) angesetzter Anordnung über die Oberseite (2) der Platte (1) nach oben vorstehen und unterseitig vorstehende Stützen (14) haben, an denen die Steckfüße oder -leisten (15) angeordnet sind.

9. Platte nach Anspruch 8,
dadurch gekennzeichnet,
daß die Gegenstände (9-13) oder deren Halter (8) in an die Schiene (4) angesetzter Anordnung nach vorn übergeneigt und entsprechend mit Abstand oberhalb der Plattenoberseite (2) angeordnet sind.

10. Platte nach Anspruch 9,
dadurch gekennzeichnet,
daß an den Stützen (14) ein nach vorn hin angeordneter Absatz (16) zur Abstützung auf der zur Platte (1) hin liegenden Oberseite (17) der Schiene (4) und/oder auf der hierzu benachbarten Oberseite (2) der Platte (1) angeordnet ist.

11. Platte nach einem der Ansprüche 8 - 10,
dadurch gekennzeichnet,
daß die Halter (8) als Konsolen ausgebildet sind.

12. Platte nach Anspruch 11,
dadurch gekennzeichnet,
daß die Halter (8) eine oberhalb der Oberseite (2) der Platte (1) in einer weiteren Ebene dazu liegende Ablagefläche (18) aufweisen.

13. Platte nach Anspruch 11,
dadurch gekennzeichnet,
daß die Halter (8) Aufnahmen (19) für die daran zu fixierenden Gegenstände (9) haben.
